# EUROPEAN PATENT SPECIFICATION

(11) **EP 0 859 941 B1**
(45) Date of publication and mention of the grant of the patent: **24.04.2002**
(21) Application number: 96930650.5
(22) Date of filing: 28.08.1996
(51) Int. Cl.: G01B 11/00, G01B 11/14, G01B 11/26, G01C 15/02, G01C 15/06, G02B 5/32, G01C 15/00, G02B 23/00

(54) **TARGET FOR LASER LEVELING SYSTEMS**
ZIELMARKE FÜR LASERNIVELLIERSYSTEME
CIBLE POUR SYSTEMES DE NIVEAU LASER

(30) Priority: 30.08.1995 US 520853; 30.08.1995 US 520852; 29.04.1996 US 693900
(43) Date of publication of application: 26.08.1998
(73) Proprietor: Mirage Development Ltd., Dayton, OH 45459 (US)
(72) Inventor: PERCHAK, Robert, M., Dayton, OH 45459 (US)
(74) Representative: Warren, Anthony Robert
(86) International application number: US9614010
(87) International publication number: WO9708509

(56) References cited:
- US-A- 3 836 258
- US-A- 5 386 319
- US-A- 5 446 542
- US-A- 5 448 358

## Description

This invention relates to target devices for viewing of a scanning light beam, preferably a laser beam, in systems used to develop an accurate level or elevation position.

Many techniques exist today for viewing scanning laser beams at a distance, as in laser beam leveling systems. A typical system is disclosed in U.S. Patent No. 4,221,483 issued 9 September 1980. These devices are often portable instruments, and produce a collimated beam of laser light which is directed on a horizontal axis and rotated (scanned), most conveniently in a circle, to produce a trace for making one or more reference level marks about an area, along a wall, etc. The instrument is leveled at its location so the laser beam scans in a truly horizontal plane. Various targets are used to assist in referencing the point or points at which the beam impinges the object (e.g. surface) to be marked.

Some of these target techniques are:
1. "White paper card" - a diffuse reflective scatterer over a broad area, in which views are relatively dim because energy is spread out;
2. "Ground glass or back side aluminized ground glass" - brighter and less diffuse than white card;
3. "Corner cube reflectors" - such as in taillight reflectors for automobiles, and which have very bright and very narrow angle of view;
4. Scotch (i.e. M) retroreflective film - similar to the corner cube reflectors;
5. The VISILINE (trademark of Spectra-Physics Laserplane, Inc.) target, as disclosed in U.S.Patent No. 5,095,629.

The last mentioned device is a molded plastic target with a side for transmission and one side for reflection. This form of target device incorporates a fresnel lens and/or group of miniprism facets which serve to direct the light off-axis. By adding a specially designed surface texture to the other side of the target, a particular shape of diffuse pattern can be generated.

The target material can additionally be molded with a dye which excludes all wavelengths except a moderately narrow band around the wavelength of the laser to be viewed. Usually the laser is a HeNe laser or a laserdiode operating around 633nm. These are used because of cost and availability. A yellow-green laser is sometimes used as these are more suitable to the sensitivity of the human eye.

The aforementioned targets are typically used with a rotating laser beam of less than 2 milliwatts and at a rotational speed of less than 600 rev./min. This power and scanning speed limit results from government regulations intended to protect the eyes of users. The rotating beam provides for the definition of a plane, particular suitable for contracting, architectural, and surveying purposes.

However, at large distances from the laser, the time during which the laser beam sweeps across the target area is very short. For example, a 2 inch (5 cm.) wide target that is 100 feet (30.5 m.) away from the instrument would be illuminated by the laser beam only about 270 micro-seconds at 60 rev./min. This is less than the integration time of the human retina, and thus causes the beam to appear dimmer to the user.

The projected beam is typically Gaussian or near Gaussian, which means that the edges of the beam are not clearly defined. Furthermore, as the target is moved farther from the source, the beam spreads and becomes more degraded. Thus, using an "edge" introduces error. If a user tries very carefully to determine the center of the beam, difficulty still arises due to the lack of contrast.

From one aspect, the present invention provides a method of determining the location of the center of an incoming beam as the beam is moved across a predetermined object, as defined in claim 1.

From another aspect, the present invention provides a passive hand held target, as defined in claim 2.

The present invention also provides a scanning system as defined in claim 3.

The present invention makes use of the fact that the human eye and optical/nervous system is extremely good at splitting a distance in half or finding the center of a circle, etc. It is also very good at perceiving differences in brightness. It is not good at determining absolute brightness, but so long as the retina does not reach saturation it is a good detector of difference in brightness. The present invention also makes use of this fact. Targets according to the present invention are relatively inexpensive passive devices of minimum size, e.g. 3 inches by 4 inches by 1/2 inch thick (7.6 cm by 10.1 cm by 1.27 cm thick), or even thinner, which can fit in a shirt pocket or the like.

The principal object of this invention is to provide a passive target for use with a scanning light beam, particularly a laser beam, in which the beam impinged upon (i.e. input to) the target is split and the split beam is directed to an imaging or viewing screen where an observer can discern equality or inequalities of the images as the target is moved to center its input window with respect to the beam; wherein adjustment of the target then provides a reference for marking of a surface adjacent the target; and wherein the beam splitter may be one or more beam dividing axicons (or optical equivalent) or a mask which produces a pair of symmetrical easy to compare beam shapes.

A number of the embodiments of these targets are constructed with their elements incorporated as target structure, rather than as optical elements housed in a case. For example the lens and beam divider functions can be formed into optical quality parts such as a polycarbonate block, or the function of those elements can be provided by a first hologram which is optically equivalent of the input lens and beam dividing axicon, and the viewing screen diffuser function is provided by a second hologram. To improve and maintain alignment, these parts can be made essentially as an integral element, or these holograms may be made on a single substrate mounted to the face of a suitable housing. The optical path for the impinging light beam (after it is divided) may be transmitted and reflected from the input to the view window through one or more reflector surfaces.

In another embodiment the holograms and substrate are mounted to a light transmitting (preferably transparent) rigid backing substrate. The divided image beam is transmitted through the backing substrate, which functions as a wave guide, and ultimately through the diffusing hologram at the viewing window.

Utilizing integral constructions as disclosed, and using input and output holograms, offers advantages of minimized space for the optical elements, and built-in permanent alignment of these elements. They also are sturdy, have no external protuberances, and will withstand rough handling in a construction environment. In another embodiment the lens and beam divider functions can be formed of optical quality parts such as a polycarbonate or acrylic generally rectangular block-like body, on one end of which is formed (or mounted) adjacent parts of fresnel lenses which provide a lens means which is the optical equivalent of the input lens and beam dividing axicon. The viewing screen diffuser function is provided by a frosted area or a hologram at the other end of the block. To improve and maintain alignment, these parts are assembled into an essentially integral element. The optical path for the impinging light beam (after it is divided) transmitted and, in some embodiments reflected, from the input lenses to the view window through the block body, which functions as a light guide as well as forming the basic structural member of the target.

The divided image beam is transmitted through the light guide, which functions as a wave guide, to a filter and a frosted surface (or equivalent hologram) at the viewing window. The sides and edges (except for the input and output or viewing areas) of the block-like body are preferably covered with suitable light blocking label material. Such material can be chosen to have filter capabilities as well; this is useful in an embodiment wherein the viewing area is on a side, rather than the opposite end, of the body.

Utilizing integral constructions as disclosed offers advantages of minimized expense space for the optical elements, and built-in permanent alignment of these elements. The results are target constructions which are sturdy, passive in operation, have no external protuberances, are relatively small and convenient, and will withstand rough handling in a construction environment.

Various embodiments of the invention will now be described with reference to the accompanying drawings, in which:-
Fig. 1 is a schematic perspective view of a target device enbodying the invention, incorporating a mask as a light beam divider;
Figs. 2A, 2B and 2C are comparative depictions of image displays as produced by the device during its use;
Fig. 3 is a schematic view of a device embodying the invention as taken from the side of this optical system, employing an axicon as a beam divider;
Fig. 4 is a schematic perspective view of a device embodying the invention with a dual function axicon;
Fig. 5 is a comparative chart showing the images on the viewing screen when the target is above the center of the scanning beam, at the beam center, and below the beam center;
Fig. 6 is a perspective view of a system including additional optical elements to the simpler version of system shown in Fig. 3;
Fig. 7 is a perspective view of a device showing use of holograms as optical elements;
Fig. 8 is a perspective view of a target, using multiple holograms on a common substrate;
Fig. 9 is a perspective view of a target, showing a typical housing with input and viewing widows;
Fig. 10 is a schematic perspective view of a simplified target with integral lens and axicon configurations;
Fig. 11 is a front view of another form of target device, employing two holograms and two reflective surfaces housed within a hollow casing;
Fig. 12 is a side view of the target shown in Fig. 11;
Fig. 13 is an end view, with elementary optical paths added, of the target shown in Fig. 11;
Fig. 14 is a front view of another form of target device, employing two holograms and three reflective surfaces, also within a hollow casing;
Fig. 15 is a side view of the target shown in Fig. 14; and
Fig. 16 is an end view, with elementary optical paths added, of the target shown in Fig. 14.
Fig. 17 is an exploded perspective view of another form of a target device embodying the invention, with the lens and beam splitting parts at the input end of the body block, and the viewing screen at the opposite end of the block;
Fig. 18 is a perspective view, on another angle, of the target shown in Fig. 17;
Fig. 19 is a view illustrating the light beam paths through the block body and the images observed by a user;
Fig. 20 is a perspective view of another form of a target device in which the optical path is diverted in the body block to a viewing screen at a window in a side of the body

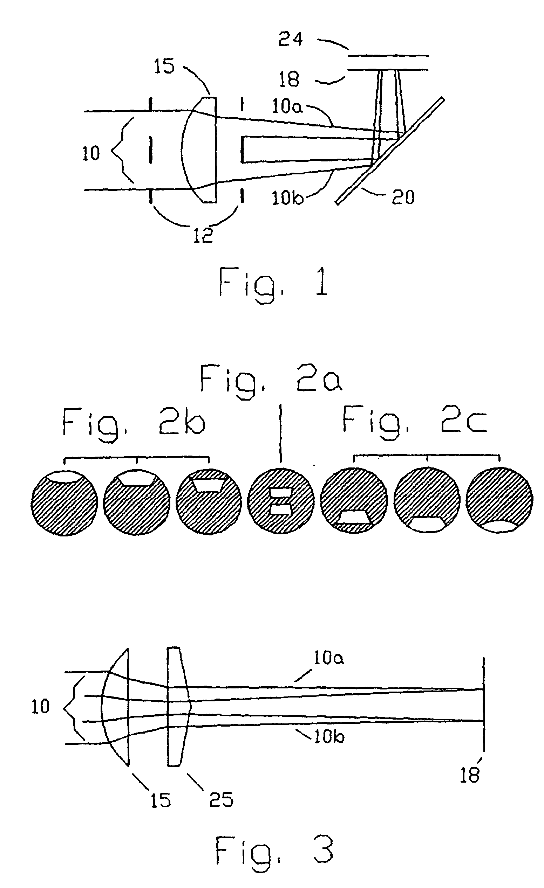

Referring to Fig. 1, the incoming laser beam 10 is split into two equal parts 10A and 10B (when the device is on center of the incoming beam) by blocking a part of the beam. In this embodiment one or more masks 12 are placed on the axis of beam 10 either before or after a lens 15. This lens can be a simple spherical lens or a cylindrical lens, and acts to reduce the beam 10 in size in both axes perpendicular to the beam (when using a positive spherical lens), or to reduce the beam 10 in one axis perpendicular to the beam (by using a positive cylindrical lens).

The split beams 10A, 10B proceed toward a viewing screen 18, either impinging directly on such screen, or being diverted through some angle by a prism or mirror, i.e. a reflector element 20, as may be convenient in a particular design. The beams 10A, 10B are projected onto viewing screen 18, which may be either a transmissive or reflective conventional diffuser, transmissive or reflective compound optic diffuser (as described in U.S. Pat. 5,095,629), or a transmissive or reflective holographic diffuser. It is understood that holographic diffusers are a specific form of diffractive optical elements.

The determination of the centerline of the incoming laser beam 10 is made from observing the ratio of the size and brightness of the two images from beams 10A and 10B, as shown on viewing screen 18. The human eye naturally and easily sets the dark space (due to the line on the mask) dividing the beam into two equal parts, as in Figs. 1 and 2A.

It can be seen that the mask 12 is a passive device, and serves to block a central portion of beam 10, actually it is placed to block the central portion or light gathering portion of the light gathering device e.g. lens 15. If the above described optical system is mounted in a convenient small housing (indicated generally at 22) and is translated up and down, at the distant target area to be marked, in the vertical (y) axis of the incoming beam 10, the resultant images in the view screen will be as generally shown in Fig. 2B (target above the beam axis), in Fig. 2A (target on beam axis), and in Fig. 2C (target below the beam axis).

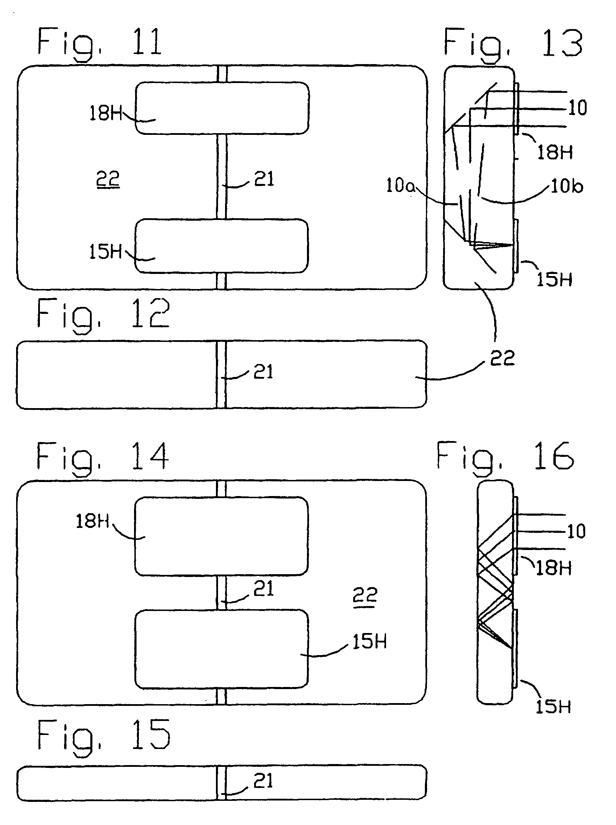

A particularly important advantage of this target is that it allows for readily finding the centerline of a scanning light beam (e.g. a laser beam) in normal room lighting (filters 24 can be added to provide adequate ambient light rejection). The target is also extremely tolerant of changes in the tilt angle of the housing with respect to the incoming scanning beam. Since mask 15 serves to divide or "split" the beam in equal halves when the housing input window is on center of the incoming beam, the viewer or user sees the relative position of the mask with respect to the beam. Stated another way, mask 15 projects a shadow of itself on the view screen 18, and the beam falls relative to it. The mask is precisely at one point in space, at the center of the beam; that spot is where the mask is physically at the center point of the beam. Therefore, if an index mark on the housing (see Fig. 10 and its later description) is coincident with the centerline or beam axis, then that mark, and the correct determination of the centerline, will be independent of rotation about that point.

Further enhancements can be made by employing more specialized different targets (masks) that can be conceived for aiding the human eye - brain's capability of finding a balance or centerpoint. The split beam image as in Figs. 2A, 2B, 2C comprises symmetrically shaped beams which can produce images which are easily compared in detail, so the observer can easily detect equality of the two images, or inequalities between them, with the unaided eye. As the target is moved above and below the scanned plane, images on the view screen would appear as in Figs. 2B and 2C, and the equal images whereat the target is aligned with the center of the incoming beam, appear as in Fig. 2A.

The apparent motion of the light areas is observed because the design of the target and the changes in brightness of the projected areas influence the observer's visual perception. The lens 15 can actually be designed to enhance this effect. For example, it can be designed to be very sensitive close to the centerline and less sensitive farther away.

A working prototype of the above described device, has demonstrated level alignments to 1/16 inch (0.1588 cm) without effort, using a 1/2 inch (1.27 cm) diameter input beam from an HeNe laser source in a well lit office environment. Measurements to 1/32 inch (0.0794 cm) are also easily done.

Fig. 3 shows the basic parts of a target system using an axicon (e.g. a biprism) 25 as a beam dividing element. In that embodiment, the axicon divides the incoming beam (which is assumed to be symmetrical about its centerline) into parts 10A, 10B which are on equal intensity when the incoming light beam is on the center of the axicon 25. As the incoming beam moves above or below such centerline (as by moving the housing in which the system is confined) the two beam parts 10A and 10B will vary in intensity with respect to each other on viewing screen 18, providing to the viewer (user) a means to discern not only off-center position but the direction of such off-center position. By adjusting the position of the target housing vis-a-vis the incoming beam, the viewed images of the beam parts will change in intensity and when they appear equal, the optical centerline of the lens/axicon system will be aligned with the incoming scanning beam 10.

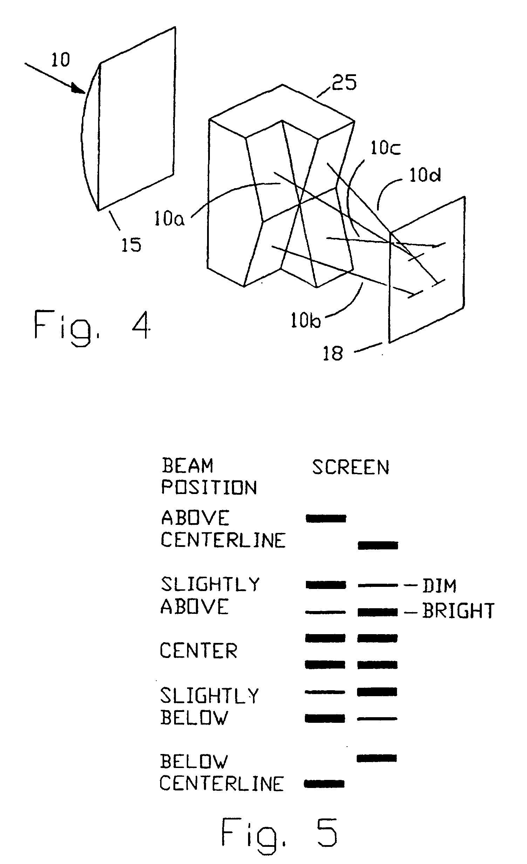

In Fig. 4 a more complex form of dual axicon 25 is illustrated, whereby the incoming beam 10 is divided into four parts 10A, 10B, 10C, 10D. The two axicons produce relatively inverse images, thus providing an improved means of discerning equality (or inequality) of the beam parts.

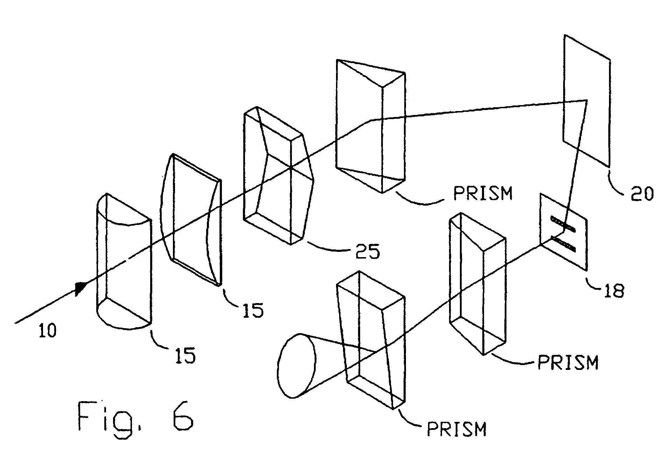

Fig. 6 is an expanded schematic perspective view of a target system in which a focusing cylindrical lens 15A is added ahead of lens 15, a prism 16 is added between axicon 25 and mirror 20, and optical wedges 26 and 27 are added after the diffuser viewing screen 18 for the purpose of directing the output beams at a desired angle.

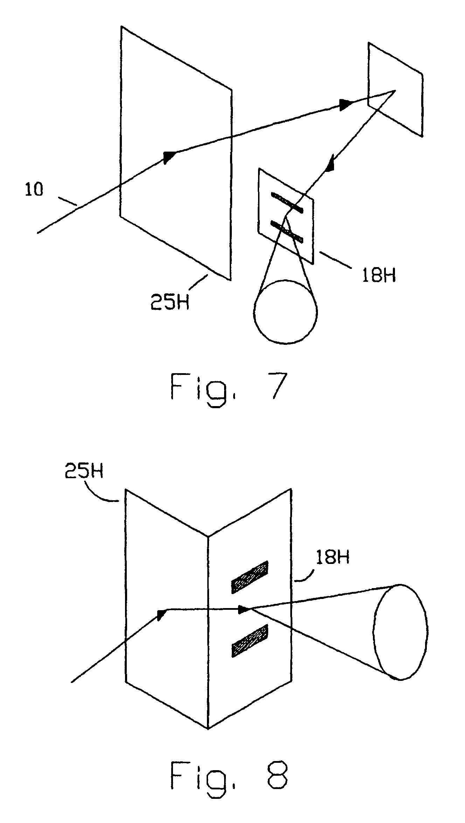

Fig. 7 illustrates another embodiment using the substitution of holograms 25H and 18H for the lens/axicon combination and the viewing screen diffuser. This provides the advantage of achieving the dividing and visual differentiation of the beam parts with optical elements having minimal thickness. In the embodiment of Fig. 8, a combination of two holograms is formed on a single substrate, and the light beams can be directed through them either by appropriately located reflecting surfaces, or by bending the substrate between the holograms, as shown.

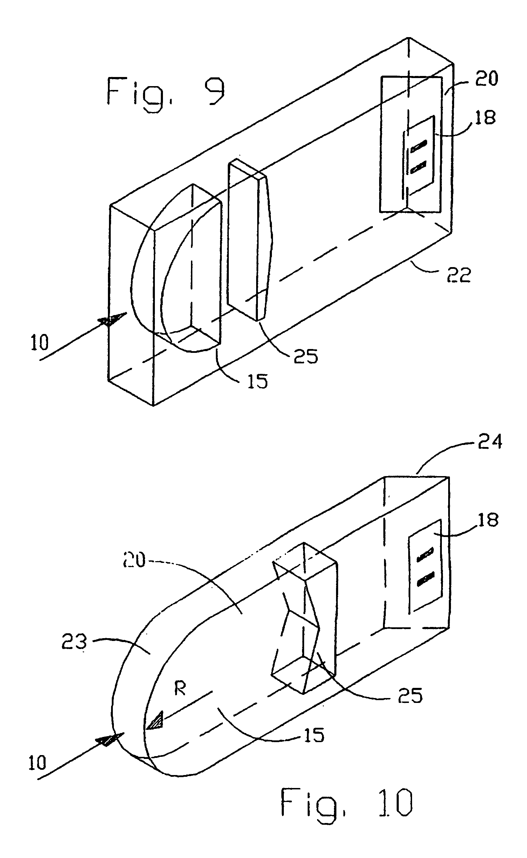

Fig. 9 shows a typical housing 22 which incorporates a cylindrical receiving lens 15 which passes the incoming scanning beam to an internal reflector 29, thence through an axicon mounted internally of the housing. The divided beams are then transmitted to mirror 20 mounted within the housing, and thence to the viewing window in which a diffusing screen (preferably a hologram) 18 is mounted. An alignment marker, such as a visual groove or ridge 23 about the exterior of housing 22, provides a reference which bisects the inlet and viewing windows and can be used to transfer an alignment marking to a surface adjacent which the target is held.

The embodiment illustrated in Fig. 10 is a suitably formed relatively thin (no greater than 0.25 inch (0.64 cm)) plate or block 20 of optical quality polycarbonate. One end 23 of the block is formed to a radius R to act as a cylindrical lens 15. Along the longitudinal axis of the block, before the focal point of the lens, is an axicon 25 which is formed by removing material to the desired axicon shape. This makes a convenient change in the index of refraction in this area, due to the air space thus formed, which in turn divides the incoming scanning light beam into at least two parts which are transmitted on through the block.

At the other end 24 of block 20 is a bevel surface, preferably at 45°, which reflects the divided beams toward the front surface of block 20, where a diffusing viewing screen 18 is fastened. The two images thus appear at screen 18 and are of equal brightness when the target is aligned along the centerline of the incoming scanning beam 10.

In the embodiment of Figs. 11-13, a hologram 15H can be designed to perform the function of a spherical lens or a cylindrical lens, and designed so as to reduce the beam 10 in size in both axes perpendicular to the beam (a positive spherical lens function), or to reduce the beam 10 in one axis perpendicular to the beam (a positive cylindrical lens function). The hologram 15H also can be designed to function as an axicon, dividing the incoming beam into at least two parts 10A and 10B. Hologram 15H is mounted across the receiving or input window of a rectangular housing 22.

The divided beams 10A, 10B proceed via two reflecting surfaces 20A, 20B internal of the housing 22, to impinge on a diffusing viewing screen 18H, which is a second hologram having the function of a conventional diffuser. The second hologram 18H may optionally also have a magnifying function to aid in viewing the images with the naked eye, and a function to redirect the image forming beams to a more convenient angle of view.

Thus, the lens and beam dividing functions, at the input window, are provided by first hologram 15H, and the viewing screen function is provided by second hologram 18H. To improve and maintain alignment, these holograms may be made on a single substrate mounted internally to the face of housing 22, extending across the input window and the viewing window. By making the holograms with the emulsion surface at the back of the intended mounting, i.e. internally of the housing, the holograms are thereby protected from abrasion and wear by the substrate on which they are created. The reflecting surfaces 20A, 20B can be front surface mirrors, or can be made by creating appropriate air spaces with oppositely beveled surfaces, within a polycarbonate block or the like mounted within housing 22, or simply shaped as the housing The reflecting surfaces may also be mirror-like surfaces on the interior of housing 22, or on the surfaces of the aforementioned block.

About housing 22 there is a reference marking 21 which may conveniently be a groove in the housing surface. This marking is arranged to bisect the input window and thus can be an indicator of the location of the scanning beam when it is indicated by the target as center by appropriately moving housing. Marking 21 thus is an aid to placing appropriate location (level) marks on structure being scanned for creation of a level guide reference.

The substrate with the holograms is mounted to the front of housing 22 and the reflector surfaces 20A, 20B are located (e.g. supported) within the housing to direct the divided incoming beam onto second hologram 18H. It will be appreciated that such a construction is simple and straight forward, and requires a minimum of optical alignment which is maintained after assembly of the parts.

In another embodiment (Figs. 14-16) the holograms and substrate are mounted to a light transmitting (preferably transparent) rigid backing substrate 30, which may be a form of optical block. The emulsion side of the hologram substrate is adhered to the rigid substrate 30 by suitable optical adhesive. The split image beam is refracted through the backing substrate 30 and ultimately through second hologram 18H at the viewing window.

The determination of the centerline of the incoming light beam 10 is made from observing the ratio of the size and brightness of the two images from beams 10A and 10B, as shown on viewing screen 18H.

A particularly important advantage of this light target is that it allows for readily finding the centerline of a scanning light beam in normal room lighting; filters can be added to the holograms to provide adequate ambient light rejection, as may be necessary. The target is also tolerant of changes in the tilt angle of the target housing with respect to the centerline of the incoming scanning beam. If the mark on the target housing is coincident with the centerline or beam axis, then that mark, and the correct determination of the centerline, will be independent of rotation about that point.

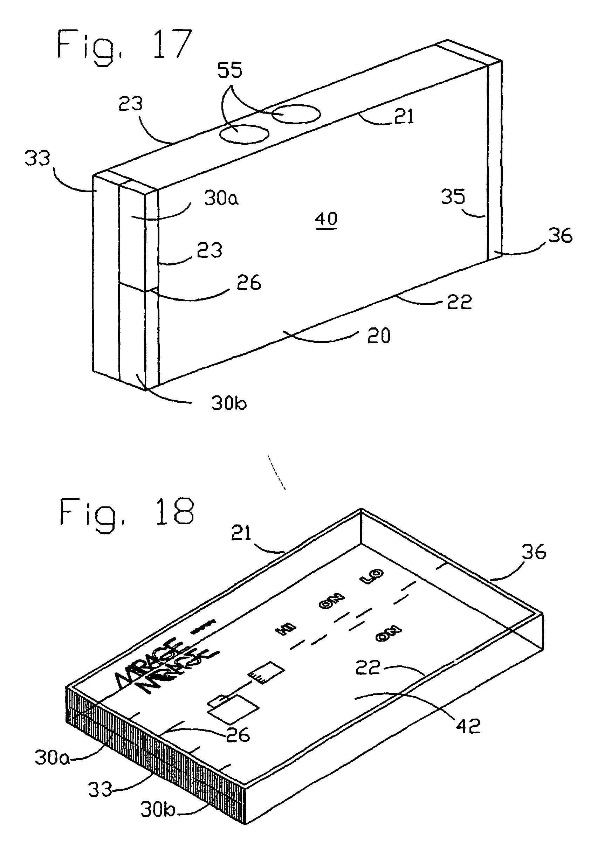

The embodiment illustrated in Fig. 17 is a suitably formed relatively thin (no greater than 0.50 inch (1.27 cm)) plate or block 20 of optical quality polycarbonate or acrylic. One end 23 of the block has attached to it a pair of complementary fresnel lenses 30A, 30B.

These lenses may be prepared from a commercially available acrylic or cellulose acetate butyrate molded fresnel lens which has its center section removed, leaving upper lens 30A and lower lens 30B, the resulting ends of which are abutted. The lenses are then secured together as shown providing a lens means which functions to produce from the incoming scanning beam 10 two beams 32A, 32B, that are focused onto the viewing window provided by a frosted plate 36, which may be of polycarbonate or equivalent, at the other end 35 of the body block, in the same manner as the beam splitting axicon disclosed previously. A filter material may be added to this end of the block to enhance the contrast and visibility of the images. Plate 36 may also be made from suitably colored material to function further as a filter. A third fresnel lens 33 is preferably mounted alongside lenses 30A, 30B. Lens 33 functions to provide a focused reference beam at the viewing window, as described hereafter.

The block 20 functions as a wave guide or light guide and minimizes scattering of the beams and provides for total internal reflection of the light to exit at the viewing window. To enhance this property, the front face 40 of block 20 is covered with a label 42 which also provides a convenient space for manufacturer's identification, and a schematic diagram of the function and use of the target, as shown in Fig. 18. Similar label pieces preferably are applied to the upper and lower edges 21, 22 and back side 23 of block 20. The lenses 30A, 30B and the viewing plate 36 thus are the only uncovered surfaces of block 20 in this embodiment.

It should be understood that the body block is not required to be a solid member to function as the requisite wave guide. An equivalent structure is a hollow block formed with internally reflective front and back surfaces, and fitted with the input lens means (as described above) and a viewing screen.

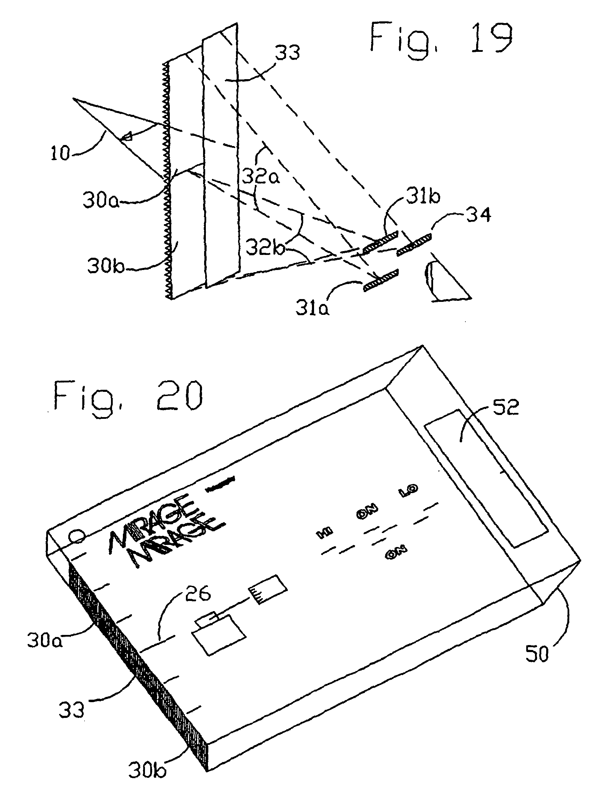

Referring to Fig. 19, the beam from upper lens 30A produces a lin image 31A and the beam from lens 30B produces a second image 31B, these two images being spaced above and below the reference image 34 produced by lens 33, will be equal in brightness and apparent width when the incoming scanning beam 10 is centered on the lenses at the index marks 26. If the target is above or below the level of the scanning beam, one or the other of images 31A, 31B will be unequal in brightness and apparent width with respect to each other, and will also appear different in brightness with respect to the reference mark. Thus, the user simply moves the target up or down until equal brightness and apparent width of the images is seen, then uses the mark or marks 26 as a guide to make a notation as appropriate.

Referring to the embodiment of Fig. 20, if it is desired to have the viewing area or screen at the side face of the target, block 20 can be provided with a 450 bevel surface 50, which can function as an internal reflecting surface to direct the beams to a viewing screen 52 defined by an opening in the front face label. In all other respects the arrangement of parts on block 20 is the same.

A particularly important advantage of this light target is that it allows for readily finding the centerline of a scanning light beam in normal room lighting; various filters can be added to provide adequate ambient light rejection, as may be necessary. The target is also tolerant of changes in the tilt angle of the target with respect to the centerline of the incoming scanning beam. If the reference mark 34 on the target housing is coincident with the centerline or beam axis, then that mark, and the correct determination of the centerline, will be independent of rotation about that reference mark. The central ray through lens 33, where the reference image 34 appears on the viewing screen, will be an indicator of the centerline of the scanning beam, even though the body may be tilted about reference mark 26.

For purposes of supporting the target from, for example, ferrous materials such as metallic rails used to support ceiling tiles, the target body is provided with a pair of high strength permanent magnets 55 recessed into the upper edge 21.

While the method herein described, and the forms of apparatus for carrying this method into effect, constitute preferred embodiments of this invention, it is to be understood that the invention is not limited to this precise method and forms of apparatus, and that changes may be made in either without departing from the scope of the invention, which is defined in the appended claims.

## Claims

1. The method of determining the location of the center of an incoming light beam as the beam is moved across a predetermined object, comprising
providing a portable passive target which can be held at one or more redetermined locations adjacent the object, the target dividing the incoming light beam (10) into component beams (10A, 10B, 10C, 10D, 32A, 32B) within the target with a beam dividing device (12, 25),
directing the component beams (10A, 10B, 10C, 10D, 32A, 32B) within the target against a viewing screen (18, 18H, 36, 52) on a surface of the target to produce adjacent images on the screen, and
adjusting the target relative to the incoming light beam until the images appear equal.

2. A passive hand held target for locating the center of a scanning light beam (10) impinged repeatedly on the target as the target is held adjacent a surface being scanned, said target comprising
a target body to be located at the surface and having an input aperture and a viewing aperture,
beam receiving and dividing means (15, 15H, 25, 30A, 30B) comprising focusing and beam dividing means in said body for receiving the scanning light beam (10) impinging on said input aperture and dividing the input beam into at least two component beam parts (10A, 10B, 10C, 10D, 32A, 32B),
means (18, 18H, 36, 52) on said target body providing for viewing images formed from the component beams at said viewing aperture, portions (20, 20H, 20B, 50) of said body providing wave guide means for directing the component light beams to said viewing means (18, 18H, 36, 52) to produce visible adjacent images for comparison as to visual equality,
whereby an observer can discern equality and inequalities of the adjacent images as the target is moved to center said input aperture with respect to the input light beam (10).

3. A scanning system for providing marks at a surface located at a distance from a scanning light beam source producing a collimated beam of light (10) directed across the surface by moving the center of the beam to different locations along the surface,
the system including
a target body located at the surface, said target body being a generally rectangular optical block (20) having relatively wide front (40) and back (35) surfaces and relatively narrower opposed first and second ends (23, 35) and opposed upper and lower edges (21, 22),
beam receiving and dividing means (15, 15H, 25, 30A, 30B) comprising a lens means (15, 15H, 30A, 30B) on said first end (23) of said block for receiving a light beam (10) from the scanning source and for dividing the light beam (10) impinging on said target into at least two beam parts (10A, 10B, 10C, 10D, 32A, 32B) directed through said block to said second end (35),
viewing means (18, 18H, 36, 52), such as a diffuser (18H) providing a viewing screen, associated with said second end (35) of said block,
said lens means (15, 15H, 30A, 30B) forming an input window on said target and said block functioning as a wave guide to transmit the divided light beams (10A, 10B, 10C, 10D, 32A, 32B) from said lens means (15, 15H, 30A, 30B) to said viewing means (18, 18H, 36, 52) to produce adjacent visible images for comparison as to visual equality and/or alignment.

4. A target as defined in claim 2 or system as defined in claim 3, wherein said body is an optical block (20) into which said beam receiving and dividing means are formed as integral lens and axicon elements (25).

5. A target or system as defined in claim 2, 3 or 4, further including
a reference indicator (26) on said target body,
whereby said body can be located at the surface and adjusted with respect to the scanning light beam (10) until the images from the divided beams (10A, 10B, 10C, 10D, 32A, 32B) appear equal, and the reference indicator (26) can then be used to mark the surface.

6. A target or system as defined in claim 2, 3, 4 or 5, further including
means for converging the component beams (10A, 10B, 10C, 10D, 32A, 32B) on said viewing means (18, 18H, 36, 52) such that the component beams (10A, 10B, 10C, 10D, 32A, 32B) produce adjacent balanced images when the incoming laser beam (10) is centered with respect to said input aperture or window.

7. A target or system as defined in any of claims 2 to 6, wherein the means for dividing the incoming beam is an axicon (25).

8. A target or system as defined in any of claims 4 to 7, wherein the functions of said lens and said axicon are provided by a first hologram (15H), and
the function of said viewing means is provided by a second hologram (18H).

9. A target or system as defined in any of claims 2 to 6, wherein the means for dividing the incoming beam comprises
a mask (12) having two spaced apart apertures dividing the incoming beam (10) into parts.

10. A target or system as defined in any of claims 2 to 6, wherein
the means for dividing the incoming beam is a diffractive optical element, preferably a hologram (15H).

11. A target or system as defined in any of claims 2 to 10, wherein
said viewing means is a diffractive optical element, preferably a hologram (18H).

12. A target or system as defined in any of claims 2 to 6, wherein said body is an optical block and the beam dividing means includes first and second fresnel lenses (30A, 30B) mounted to a first end of said block in vertical alignment and each receiving said scanning beam and forming separate images.

## Patentansprüche

1. Verfahren zur Bestimmung der Lage des Zentrums eines eingehenden Lichtstrahles wenn der Strahl quer durch ein vorherbestimmtes Objekt bewegt wird, beinhaltend
die zur Verfügungstellung eines transportablen, passiven Zieles, welches an einem oder mehreren vorherbestimmten Orten gehalten werden kann, ummittelbar angrenzend an das Objekt, wobei das Ziel den eingehenden Lichtstrahl (10) in Komponenten des Lichtstrahles (10A, 10B, 10C, 10D, 32A, 32B) in dem Ziel mit einer den Strahl aufteilenden Vorrichtung (12, 25) aufteilt,
die Komponentenstrahlen (10A, 10B, 10C, 10D, 32A, 32B) im Ziel gegen einen Sichtschirm (18, 18H, 35, 52) an der Oberfläche des Zieles zu lenken um
unmittelbar benachbart angeordnete Bilder auf dem Schirm zu produzieren, und ausrichten des Zieles relativ zum eingehenden Lichtstrahl bis die Bilder gleich erscheinen.

2. Ein passives, mit Hand gehaltenes Ziel für die Lokalisierung des Zentrums des scannenden Lichtstrahles (10), wiederholt auftreffend auf dem Ziel, wenn das Ziel unmittelbar angrenzend an einer Oberfläche gehalten wird, welche gescannt werden soll, wobei besagtes Ziel beinhaltet
einen Zielkörper um an der Oberfläche angeordnet zu werden, und aufweisend eine Eingangsblende und eine Sichtblende,
Strahl-Auffang und -Teilungs-Mittel (15, 15H, 25, 30A, 30B) beinhaltend Mittel zur Fokusierung und zur Strahlteilung in besagtem Körper für den Empfang des scannenden Lichtstrahles (10), auftreffend an besagter Eingangsblende und den Eingangsstrahl aufteilend in wenigstens zwei Strahlkomponenten (10A, 10B, 10C, 10D, 32A, 32B),
Mittel (18, 18H, 36, 52) an besagtem Zielkörper, zur Verfügung gestellt für die Anzeige von Abbildungen, gebildet aus den Komponentenstrahlen an besagter Sichtblende, Teile (20, 20H, 20B, 50) von besagten Körper, zur Verfügung stellend Wellen-Führungs-Mittel für die Lenkung der Komponenten des Lichtstrahls zu besagten Anzeigemitteln (18, 18H, 36, 52) zur Erzeugung sichtbarer, unmittelbar angrenzender Abbildungen für den visuell Vergleich der beiden miteinander auf Gleichheit,
wobei ein Beobachter die Gleichheit oder Verschiedenheit der unmittelbar benachbarten Abbildungen erkennen kann, da das Ziel so bewegt wird, dass das Zentrum von besagter Eingangsblende in Bezug zum eingehenden Lichtstrahl (10) zentriert werden kann.

3. Ein Scann-System für die zur Verfügungstellung von Marken an einer Oberfläche, lokalisiert in einem Abstand von einer Lichtstrahlquelle eines Scanners, erzeugend ein ausgeblendetes Strahlenbündel des Lichtes (10), gelenkt quer über die Oberfläche durch die Bewegung des Zentrums des Strahles an unterschiedliche Orte entlang der Oberfläche,
wobei das System beinhaltet,
einen Zielkörper, angeordnet an der Oberfläche, wobei besagter Zielkörper im wesentlichen ein rechtwinkeliger, optischer Block (20) ist, welcher eine relativ weite frontseitige Oberfläche (40) und rückseitige Oberfläche (35) aufweist, und relativ nah beieinander liegende gegenüberliegend angeordnete, erste und zweite Enden (23, 35) und gegenüberliegende obere und untere Kanten (21, 22) aufweist,
Mittel für den Empfang und die Aufteilung des Strahles (15, 15H, 25, 30A, 30B) beinhaltend ein Linsenmittel (15, 15H, 30A, 30B) an besagten ersten Ende (23) von besagten Block für den Eingang eines Lichtstrahles (10) von der Scann-Quelle und für die Aufteilung des Lichtstrahles (10), auftreffend auf besagtes Ziel, und wenigstens zwei Strahlenbündel (10A, 10B, 10C, 10D, 32A, 32B), gerichtet durch besagten Block zu besagten zweite Ende (35),
Anzeigemitteln (18, 18H, 35, 52), sowie einen Zerstreuer (18H) zur Verfügung stellend einen Anzeigeschirm, verbunden mit besagtem zweiten Ende (35) von besagtem Block,
wobei besagte Linsenmittel (15, 15H, 30A, 30B) ein Eingangsfenster an besagten Ziel bilden, und besagter Block als ein Wellenführer funktioniert, um die geteilten Bündel des Lichtstrahles (10A, 10B, 10C, 10D, 32A, 32B) von besagten Linsenmitteln (15, 15H, 30A, 30B) zu besagten Anzeigemitteln (18, 18H, 35, 52) zu senden, um unmittelbar benachbarte, sichtbare Abbildungen für die visuelle Überprüfung auf Gleichheit und/oder Ungleichheit zu produzieren.

4. Ein Ziel wie definiert in Anspruch 2 oder ein System wie definiert in Anspruch 3, wobei besagter Körper ein optischer Block (20) ist, in welchem besagte Strahl-Aufnahme- und Teilungseinheiten als integrale Linsen und axicone Elemente (25) geformt sind.

5. Ein Ziel oder ein System, wie definiert in den Ansprüchen 2, 3 oder 4, weiters beinhaltend eine Referenzanzeige (26) an besagten Zielkörper,
wobei besagter Körper an der Oberfläche angeordnet sein kann, und in Bezug auf den Lichtstrahl des Scanners (10) eingestellt werden kann, bis die Abbildungen von den aufgeteilten Lichtstrahlbündeln gleich erscheinen, und der Referenzanzeiger (26) dann verwendet werden kann um sodann die Oberfläche zu markieren.

6. Ein Ziel oder ein System, wie definiert in den Ansprüchen 2, 3, 4 oder 5, weiters beinhaltend Mittel für die Konvergierung der Strahlbündelkomponenten (10A, 10B, 10C, 10D, 32A, 32B) auf besagte Anzeigemittel (18, 18H, 36, 52), so dass die Strahlkomponenten (10A, 10B, 10C, 10D, 32A, 32B) unmittelbar benachbarte, gleiche Abbildungen produzieren, wenn der eingehende Laserstrahl (10) in Bezug auf besagte Eingangsblende oder besagtes Eingangsfenster zentriert ist.

7. Ein Ziel oder ein System, wie definiert in einem der Ansprüche 2 bis 6, wobei die Mittel für die Aufteilung des eingehenden Strahls ein Axicon (25) sind.

8. Ein Ziel oder ein System, wie definiert in einem der Ansprüche 4 bis 7, wobei die Funktion besagter Linsen und von besagtem Axicon durch ein erstes Hologramm (15H) zur Verfügung gestellt werden, und die Funktion von besagtem Anzeigemittel durch ein zweites Hologramm (18H) zur Verfügung gestellt wird.

9. Ein Ziel oder ein System wie definiert in einem der Ansprüche 2 bis 6, wobei die Mittel für die Aufteilung des eingehenden Lichtstrahles beinhaltet,
eine Maske (12), aufweisend zwei voneinander beabstandete Linsen, aufteilend den eingehenden Strahl (10) in zwei Teile.

10. Ein Ziel oder ein System, wie definiert in einem der Ansprüche 2 bis 6, wobei die Mittel für die Teilung des eingehenden Strahles ein holographisches, optisches Element sind, vorzugsweise ein Hologramm (15H).

11. Ein Ziel oder ein System, wie definiert in einem der Ansprüche 2 bis 10, wobei besagte Anzeigemittel holographische, optische Elemente sind, vorzugsweise ein Hologramm (18H).

12. Ein Ziel oder ein System, wie definiert in einem der Ansprüche 2 bis 6, wobei besagter Körper ein optischer Block ist, und die strahlteilenden Mittel beinhalten, erste und zweite Fresnel-Linsen (30A, 30B) montiert an einem ersten Ende von besagten Block in vertikaler Ausrichtung, und jede empfangend besagten Scann-Strahl und ausbildend separate Abbildungen.

## Revendications

1. Procédé de détermination de la position du centre d'un faisceau lumineux entrant lorsque le faisceau se déplace à travers un objet prédéterminé, comprenant les étapes de :
fournir une cible passive portable qui peut être maintenue à une ou plusieurs position(s) prédéterminée(s) adjacente(s) à l'objet, la cible séparant le faisceau lumineux entrant (10) en des faisceaux de composant (10A, 10B, 10C, 10D, 32A, 32B) dans la cible avec un dispositif de séparation de faisceaux (12, 25),
diriger les faisceaux de composant (10A, 10B, 10C, 10D, 32A, 32B) dans la cible contre un écran de visualisation (18, 18H, 36, 52) sur une surface de la cible pour produire des images adjacentes sur l'écran, et
ajuster la cible par rapport au faisceau lumineux entrant jusqu'à ce que les images apparaissent égales.

2. Cible passive maintenue à la main pour déterminer la position du centre d'un faisceau lumineux de balayage (10) envoyé de manière répétée sur la cible lorsque la cible est maintenue adjacente à une surface à balayer, ladite cible comprenant
un corps de cible à disposer à la surface et ayant une ouverture d'entrée et une ouverture de visualisation,
des moyens de réception et de séparation de faisceaux (15, 15H, 25, 90A, 20B) comprenant des moyens de focalisation et de séparation de faisceau dans ledit corps pour recevoir le faisceau lumineux de balayage (10) envoyé sur ladite ouverture d'entrée et séparant le faisceau d'entrée en au moins deux parties de faisceaux de composant (10A, 10B, 10C, 10D, 32A, 32B),
des moyens (18, 18H, 36, 52) sur ledit corps de cible prévus pour visualiser des images formées à partir des faisceaux de composant au niveau de ladite ouverture de visualisation, des parties (20, 20A, 20B, 50) dudit corps fournissant des moyens de guide d'ondes pour diriger les faisceaux de lumière de composant vers lesdits moyens de visualisation (18, 18H, 36, 52) pour produire des images adjacentes visibles pour une comparaison en ce qui concerne les identités visuelles,
dans laquelle un observateur peut discerner des identités et des inégalités des images adjacentes lorsque la cible est déplacée pour centrer ladite ouverture d'entrée par rapport au faisceau lumineux d'entrée (10).

3. Système de balayage pour fournir des marques sur une surface située à une distance à partir d'une source de faisceau lumineux de balayage produisant un faisceau colimaté de lumière (10) dirigé à travers la surface en déplaçant le centre du faisceau vers des positions différentes le long de la surface,
le système comprenant
un corps de cible situé à la surface, ledit corps de cible étant un bloc optique généralement rectangulaire (20) ayant des surfaces avant (60) et arrière (35) relativement larges et des première et seconde extrémités (23, 35) opposées relativement plus étroites et des bords supérieurs et inférieurs (21, 22) opposés,
des moyens de réception et de séparation de faisceau (15, 15H, 25, 30A, 30B) comprenant des moyens de lentille (15, 15H, 30A, 30B) sur ladite première extrémité (23) dudit bloc pour recevoir un faisceau lumineux (10) à partir de la source de balayage et pour diviser le faisceau lumineux (10) envoyé sur ladite cible en au moins deux parties de faisceau (10A, 10B, 10C, 10D, 32A, 32B) dirigées à travers ledit bloc vers ladite seconde extrémité (35),
des moyens de visualisation (18, 18H, 36, 52), tels qu'un diffuseur (18H), foumissant un écran de visualisation, associés à ladite seconde extrémité (35) dudit bloc,
lesdits moyens de lentille (15, 15H, 30A, 30B) formant une fenêtre d'entrée sur ladite cible et ledit bloc fonctionnant en tant que guide d'ondes pour transmettre les faisceaux lumineux divisés (10A, 10B, 10C, 10D, 32A, 32B) à partir desdits moyens de lentille (15, 15H, 30A, 30B) vers lesdits moyens de visualisation (18, 18H, 36, 52) pour produire des images visibles adjacentes pour une comparaison en ce qui concerne l'identité visuelle et/ou l'alignement.

4. Cible selon la revendication 2, ou système selon la revendication 3, dans lequel ledit corps est un bloc optique (20) dans lequel lesdits moyens de réception et de séparation de faisceau sont formés sous la forme d'une lentille monobloc et d'éléments axicon (25).

5. Cible ou système selon les revendications 2, 3 ou 4, comprenant en outre
un indicateur de référence (25) sur ledit corps de cible,
dans lequel ledit corps peut être situé à la surface et ajusté par rapport au faisceau lumineux de balayage (10) jusqu'à ce que les images à partir des faisceaux séparés (10A, 10B, 10C, 10D, 32A, 32B) apparaissent identiques et l'indicateur de référence (25) peut être utilisé pour marquer la surface.

6. Cible ou système selon la revendication 2, 3, 4 ou 5, comprenant en outre
des moyens pour faire converger les faisceaux de composant (10A, 10B, 10C, 10D, 32A, 32B) sur lesdits moyens de visualisation (18, 18H, 36, 52) de telle sorte que les faisceaux de composant (10A, 10B, 10C, 10D, 32A, 32B) produisent des images équilibrées adjacentes lorsque le faisceau laser entrant (10) est centré par rapport à ladite ouverture d'entrée ou fenêtre.

7. Cible ou système selon l'une quelconque des revendications 2 à 6, dans lequel les moyens pour séparer le faisceau entrant sont formés par un axicon (25).

8. Cible ou système selon l'une quelconque des revendications 4 à 7, dans lequel les fonctions de ladite lentille et dudit axicon sont fournies par un premier hologramme (15H), et la fonction desdits moyens de visualisation est fournie par un second hologramme (18H).

9. Cible ou système selon l'une quelconque des revendications 2 à 6, dans lequel les moyens pour séparer le faisceau entrant comprennent un masque (12) ayant deux ouvertures espacées séparant le faisceau entrant (10) en parties de faisceau.

10. Cible ou système selon l'une quelconque des revendications 2 à 6, dans lequel les moyens pour séparer le faisceau entrant sont réalisés sous la forme d'un élément optique diffractif, de préférence un hologramme (15H).

11. Cible ou système selon l'une quelconque des revendications 2 à 10, dans lequel lesdits moyens de visualisation sont réalisés sous la forme d'un élément optique diffractif, de préférence un hologramme (18H).

12. Cible ou système selon l'une quelconque des revendications 2 à 6, dans lequel ledit corps est un bloc optique et les moyens de séparation de faisceau comprennent des première et seconde lentilles de Fresnel (30A, 30B) montées sur une première extrémité dudit bloc en alignement vertical et chacune recevant ledit faisceau de balayage et formant des images séparées.
